# EUROPEAN PATENT APPLICATION

(11) **EP 3 351 331 A1**
(43) Date of publication of application: **25.07.2018**
(21) Application number: 17206112.9
(22) Date of filing: 08.12.2017
(51) Int. Cl.: B23K 1/00, B23K 35/32, B23K 35/36, B23P 6/00, F01D 5/00, B23P 6/04, B23K 101/00

(54) **METHOD FOR TREATING A COMPONENT AND HETEROGENEOUS COMPOSITION**

(30) Priority: 12.12.2016 US 201615375416
(71) Applicant: General Electric Company, Schenectady, NY 12345 (US)
(72) Inventor: CUI, Yan, Greenville, SC South Carolina 29615 (US); KOTTILINGAM, Srikanth Chandrudu, Greenville, SC South Carolina 29615 (US); PLETCHER, Timothy, Greenville, SC South Carolina 29615 (US); TOLLISON, Brian Lee, Greenville, SC South Carolina 29615 (US)
(74) Representative: Foster, Christopher Michael

(57) **Abstract**

A method for treating a component and a heterogeneous composition are provided. The method includes the steps of brazing the component with a heterogeneous composition. The heterogeneous composition includes a braze material and a ceramic additive. The braze material and the ceramic additive are intermixed with one another as distinct phases. The heterogeneous composition may include, but not be limited to, a braze material and a silicon carbide. The braze material includes a braze filler. The silicon carbide has a configuration including, but not limited to, fibers, powders, and combinations thereof.

## Description

### FIELD OF THE INVENTION

The present invention is generally directed to a braze material and a method for treating a component using a braze material. More specifically, the present invention is directed to a braze material including a braze material and silicon carbide, and a method of providing the braze material.

### BACKGROUND OF THE INVENTION

Gas turbine machines typically use high strength and oxidation resistant hard-to-weld (HTW) alloys to fabricate hot gas path components, such as airfoils, buckets, blades, nozzles, vanes, shrouds, rotating turbine components, wheels, seals, combustor liners, 3D-manufactured components and transition ducts. Hard-to-weld (HTW) alloys typically show desirable mechanical properties for turbine operating temperatures and conditions.

However, during operation, components formed from hard-to-weld (HTW) alloys experience severe working environment, and material degradation will occur due to fatigue, creep, corrosion or oxidization. Brazing techniques are suitable to rejuvenate service-run parts because brazed hard-to-weld (HTW) alloys show a great mechanical strength.

Even though numerous, commercial braze materials are available to be selected from the marketplace, there are still many limitations and concerns due to poor wear resistance capability and weak oxidization performance during the high temperature service period.

### BRIEF SUMMARY OF THE INVENTION

In an exemplary embodiment, a method for treating a component is provided. The method for treating a component includes the steps of brazing the component with a heterogeneous composition. The heterogeneous composition includes a braze material and a silicon carbide. The braze material and the ceramic additive are intermixed with one another as distinct phases.

In another exemplary embodiment, a heterogeneous composition including a braze material and a ceramic additive is provided. The braze material and the ceramic additive are intermixed with one another as distinct phases.

In another yet exemplary embodiment, a heterogeneous composition including a braze material and a silicon carbide is provided. The braze material includes a braze filler. The braze filler includes a) an alloy including a composition, by weight, of about 14% chromium, about 10% cobalt, about 3.5% aluminum, about 2.5% tantalum, about 2.75% boron, about 0.05% yttrium, and a balance of nickel, b) an alloy including a composition, by weight, of about 3% iron, about 3.1% boron, about 4.5% silicon, about 7% chromium, and a balance of nickel, c) an alloy including a composition, by weight, of about 10% silicon, about 19% chromium, and a balance of nickel, d) B93 (Ni₁₄Cr_{9.5}CO_{4.9}Ti₄W₄Mo₄Al_{4.5}Si_{0.7}B), e) D15 (Ni_{15.3}Cri_{0.3}Co_{3.5}Ta_{3.5}Al_{2.3}B), or combinations thereof. The silicon carbide includes a configuration including fibers, powders, and combinations thereof. The silicon carbide includes SF-7, SC-9M, or combinations thereof. The braze material and the silicon carbide are intermixed with one another as distinct phases.

Other features and advantages of the present invention will be apparent from the following more detailed description of the preferred embodiment which illustrates, by way of example, the principles of the invention.

### DETAILED DESCRIPTION OF THE INVENTION

Provided are an exemplary method and heterogeneous composition. Embodiments of the present disclosure, in comparison to compositions and method not utilizing one or more features disclosed herein, improve oxidization performance and increase wear resistance at elevated temperatures or a combination thereof.

All numbers expressing quantities of ingredients and/or reaction conditions are to be understood as being modified in all instances by the term "about", unless otherwise indicated.

All percentages and ratios are calculated by weight unless otherwise indicated. All percentages are calculated based on the total weight of a composition unless otherwise indicated. All component or composition levels are in reference to the active level of that component or composition, and are exclusive of impurities, for example, residual solvents or by-products, which may be present in commercially available sources.

The articles "a" and "an," as used herein, mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used. The adjective "any" means one, some, or all indiscriminately of whatever quantity.

The term "at least one," as used herein, means one or more and thus includes individual components as well as mixtures/combinations.

The term "comprising" (and its grammatical variations), as used herein, is used in the inclusive sense of "having" or "including" and not in the exclusive sense of "consisting only of."

In accordance with the disclosure, the present invention may comprise an embodiment including a method for treating a component with a heterogeneous composition. The component herein illustrated may comprise a metal or an alloy. In some embodiments, the alloy may comprise an HTW alloy. As used herein, the term "HTW alloy" is an alloy that exhibits liquation cracking and strain-age cracking, and which is therefore impractical to weld. In a further embodiment, the HTW alloy is a superalloy. The term "superalloy" is used herein as it is commonly used in the art; i.e., a highly corrosion and oxidation resistant alloy that exhibits excellent mechanical strength and resistance to creep at high temperatures.

In some embodiments, the superalloy may include, but not be limited to, nickel-based superalloy, cobalt-based superalloy, iron-based superalloy, titanium-based superalloy, or combinations thereof. The superalloy may include, but not be limited to, a material selected from the group consisting of Hastelloy, Inconel alloys, Waspaloy, Rene alloys, such as GTD111, GTD444, Mar M247, IN100, IN 738, René 80, IN 939, René N2, René N4, René N5, René N6, René 65, René 77 (Udimet 700), René 80, René 88DT, René 104, René 108, René 125, René 142, René 195, René N500, René N515, IN 706, CM247, MarM247, CMSX-4, MGA1400, MGA2400, INCONEL 700, INCONEL 738, INCONEL 792, DS Siemet, CMSX10, PWA1480, PWA1483, PWA1484, TMS-75, TMS-82, Mar-M-200, UDIMET 500, ASTROLOY, and combinations thereof.

In some embodiments, the component may include, but not be limited to, a turbine component including at least one of blades, buckets, vanes, nozzles, shrouds, combustor lines, and transition ducts.

As used herein, "DF-4B" refers to an alloy including a composition, by weight, of about 14% chromium, about 10% cobalt, about 3.5% aluminum, about 2.5% tantalum, about 2.75% boron, about 0.05% yttrium, and a balance of nickel.

As used herein, "BNi-2" refers to an alloy including a composition, by weight, of about 3% iron, about 3.1% boron, about 4.5% silicon, about 7% chromium, and a balance of nickel.

As used herein, "BNi-5" and "AMS 4782" refer to an alloy including a composition, by weight, of about 10% silicon, about 19% chromium, and a balance of nickel.

As used herein, "BNi-9" refers to an alloy including a composition, by weight, of about 15% chromium, about 3% boron, and a balance of nickel.

As used herein, "ASTROLOY" refers to an alloy including a composition, by weight, of about 15% chromium, about 17% cobalt, about 5.3% molybdenum, about 4% aluminum, about 3.5% titanium, and a balance of nickel.

As used herein, "DS Siemet" refers to an alloy including a composition, by weight, of about 9% cobalt, about 12.1% chromium, about 3.6% aluminum, about 4% titanium, about 5.2% tantalum, about 3.7% tungsten, about 1.8% molybdenum, and a balance of nickel.

As used herein, "GTD111" refers to an alloy including a composition, by weight, of about 14% chromium, about 9.5% cobalt, about 3.8% tungsten, about 4.9% titanium, about 3% aluminum, about 0.1% iron, about 2.8% tantalum, about 1.6% molybdenum, about 0.1% carbon, and a balance of nickel.

As used herein, "GTD444" refers to an alloy including a composition, by weight, of about 7.5% cobalt, about 0.2% iron, about 9.75% chromium, about 4.2% aluminum, about 3.5% titanium, about 4.8% tantalum, about 6% tungsten, about 1.5% molybdenum, about 0.5% niobium, about 0.2% silicon, about 0.15% hafnium, and a balance of nickel.

As used herein, "MGA1400" refers to an alloy including a composition, by weight, of about 10% cobalt, about 14% chromium, about 4% aluminum, about 2.7% titanium, about 4.7% tantalum, about 4.3% tungsten, about 1.5% molybdenum, about 0.1% carbon, and a balance of nickel.

As used herein, "MGA2400" refers to an alloy including a composition, by weight, of about 19% cobalt, about 19% chromium, about 1.9% aluminum, about 3.7% titanium, about 1.4% tantalum, about 6% tungsten, about 1% niobium, about 0.1% carbon, and a balance of nickel.

As used herein, "PMA 1480" refers to an alloy including a composition, by weight, of about 10% chromium, about 5% cobalt, about 5% aluminum, about 1.5% titanium, about 12% tantalum, about 4% tungsten, and a balance of nickel.

As used herein, "PWA1483" refers to an alloy including a composition, by weight, of about 9% cobalt, about 12.2% chromium, about 3.6% aluminum, about 4.1% titanium, about 5% tantalum, about 3.8% tungsten, about 1.9% molybdenum, and a balance of nickel.

As used herein, "PMA 1484" refers to an alloy including a composition, by weight, of about 5% chromium, about 10% cobalt, about 2% molybdenum, about 5.6% aluminum, about 9% tantalum, about 6% tungsten, and a balance of nickel.

As used herein, "René N2" refers to an alloy including a composition, by weight, of about 7.5% cobalt, about 13% chromium, about 6.6% aluminum, about 5% tantalum, about 3.8% tungsten, about 1.6% rhenium, about 0.15% hafnium, and a balance of nickel.

As used herein, "René N4" refers to an alloy including a composition, by weight, of about 9.75% chromium, about 7.5% cobalt, about 4.2% aluminum, about 3.5% titanium, about 1.5% molybdenum, about 6.0% tungsten, about 4.8% tantalum, about 0.5% niobium, about 0.15% hafnium, and a balance of nickel.

As used herein, "René N5" refers to an alloy including a composition, by weight, of about 7.5% cobalt, about 7.0% chromium, about 6.5% tantalum, about 6.2% aluminum, about 5.0% tungsten, about 3.0% rhenium, about 1.5% molybdenum, about 0.15% hafnium, and a balance of nickel.

As used herein, "René N6" refers to an alloy including a composition, by weight, of about 12.5% cobalt, about 4.2% chromium, about 7.2% tantalum, about 5.75% aluminum, about 6% tungsten, about 5.4% rhenium, about 1.4% molybdenum, about 0.15% hafnium, and a balance of nickel.

As used herein, "René 65" refers to an alloy including a composition, by weight, of about 13% cobalt, up to about 1.2% iron, about 16% chromium, about 2.1% aluminum, about 3.75% titanium, about 4% tungsten, about 4% molybdenum, about 0.7% niobium, up to about 0.15% manganese, and a balance of nickel.

As used herein, "René 77 (Udimet 700)" refers to an alloy including a composition, by weight, of about 15% chromium, about 17% cobalt, about 5.3% molybdenum, about 3.35% titanium, about 4.2% aluminum, and a balance of nickel.

As used herein, "René 80" refers to an alloy including a composition, by weight, of about 14% chromium, about 9.5% cobalt, about 4% molybdenum, about 3% aluminum, about 5% titanium, about 4% tungsten, about 0.17% carbon, and a balance of nickel.

As used herein, "René 88DT" refers to an alloy including a composition, by weight, of about 16% chromium, about 13% cobalt, about 4% molybdenum, about 0.7% niobium, about 2.1% aluminum, about 3.7% titanium, about 4% tungsten, about 0.1% rhenium, a maximum of about 4.3% rhenium and tungsten, and a balance of nickel.

As used herein, "René 104" refers to an alloy including a composition, by weight, of about 13.1% chromium, about 18.2% cobalt, about 3.8% molybdenum, about 1.9% tungsten, about 1.4% niobium, about 3.5% aluminum, about 3.5% titanium, about 2.7% tantalum, and a balance of nickel.

As used herein, "René 108" refers to an alloy including a composition, by weight, of about 8.4% chromium, about 9.5% cobalt, about 5.5% aluminum, about 0.7% titanium, about 9.5% tungsten, about 0.5% molybdenum, about 3% tantalum, about 1.5% hafnium, and a balance of nickel.

As used herein, "René 125" refers to an alloy including a composition, by weight, of about 8.5% chromium, about 10% cobalt, about 4.8% aluminum, up to about 2.5% titanium, about 8% tungsten, up to about 2% molybdenum, about 3.8% tantalum, about 1.4% hafnium, about 0.11% carbon, and a balance of nickel.

As used herein, "René 142" refers to an alloy including a composition, by weight, of about 6.8% chromium, about 12% cobalt, about 6.1% aluminum, about 4.9% tungsten, about 1.5% molybdenum, about 2.8% rhenium, about 6.4% tantalum, about 1.5% hafnium, and a balance of nickel.

As used herein, "René 195" refers to an alloy including a composition, by weight, of about 7.6% chromium, about 3.1% cobalt, about 7.8% aluminum, about 5.5% tantalum, about 0.1% molybdenum, about 3.9% tungsten, about 1.7% rhenium, about 0.15% hafnium, and a balance of nickel.

As used herein, "René N500" refers to an alloy including a composition, by weight, of about 7.5% cobalt, about 0.2% iron, about 6% chromium, about 6.25% aluminum, about 6.5% tantalum, about 6.25% tungsten, about 1.5% molybdenum, about 0.15% hafnium, and a balance of nickel.

As used herein, "René N515" refers to an alloy including a composition, by weight, of about 7.5% cobalt, about 0.2% iron, about 6% chromium, about 6.25% aluminum, about 6.5% tantalum, about 6.25% tungsten, about 2% molybdenum, about 0.1% niobium, about 1.5% rhenium, about 0.6% hafnium, and a balance of nickel.

As used herein, "MarM247" and "CM247" refer to an alloy including a composition, by weight, of about 5.5% aluminum, about 0.15% carbon, about 8.25% chromium, about 10% cobalt, about 10% tungsten, about 0.7% molybdenum, about 0.5% iron, about 1% titanium, about 3% tantalum, about 1.5% hafnium, and a balance of nickel.

As used herein, "IN100" refers to an alloy including a composition, by weight, of about 10% chromium, about 15% cobalt, about 3% molybdenum, about 4.7% titanium, about 5.5% aluminum, about 0.18% carbon, and a balance of nickel.

As used herein, "INCONEL 700" refers to an alloy including a composition, by weight, of up to about 0.12% carbon, about 15% chromium, about 28.5% cobalt, about 3.75% molybdenum, about 2.2% titanium, about 3% aluminum, about 0.7% iron, up to about 0.3% silicon, up to about 0.1% manganese, and a balance of nickel.

As used herein, "INCONEL 738" refers to an alloy including a composition, by weight, of about 0.17% carbon, about 16% chromium, about 8.5% cobalt, about 1.75% molybdenum, about 2.6% tungsten, about 3.4% titanium, about 3.4% aluminum, about 0.1% zirconium, about 2% niobium, and a balance of nickel.

As used herein, "INCONEL 792" refers to an alloy including a composition, by weight, of about 12.4% chromium, about 9% cobalt, about 1.9% molybdenum, about 3.8% tungsten, about 3.9% tantalum, about 3.1% aluminum, about 4.5% titanium, about 0.12% carbon, about 0.1% zirconium, and a balance of nickel.

As used herein, "UDIMET 500" refers to an alloy including a composition, by weight, of about 18.5% chromium, about 18.5% cobalt, about 4% molybdenum, about 3% titanium, about 3% aluminum, and a balance of nickel.

As used herein, "Mar-M-200" refers to an alloy including a composition, by weight, of about 9% chromium, about 10% cobalt, about 12.5% tungsten, about 1% niobium, about 5% aluminum, about 2% titanium, about 10.14% carbon, about 1.8% hafnium, and a balance of nickel.

As used herein, "TMS-75" refers to an alloy including a composition, by weight, of about 3% chromium, about 12% cobalt, about 2% molybdenum, about 6% tungsten, about 6% aluminum, about 6% tantalum, about 5% rhenium, about 0.1% hafnium, and a balance of nickel.

As used herein, "TMS-82" refers to an alloy including a composition, by weight, of about 4.9% chromium, about 7.8% cobalt, about 1.9% molybdenum, about 2.4% rhenium, about 8.7% tungsten, about 5.3% aluminum, about 0.5% titanium, about 6% tantalum, about 0.1% hafnium, and a balance of nickel.

As used herein, "CMSX-4" refers to an alloy including a composition, by weight, of about 6.4% chromium, about 9.6% cobalt, about 0.6% molybdenum, about 6.4% tungsten, about 5.6% aluminum, about 1.0% titanium, about 6.5% tantalum, about 3% rhenium, about 0.1% hafnium, and a balance of nickel.

As used herein, "CMSX-10" refers to an alloy including a composition, by weight, of about 2% chromium, about 3% cobalt, about 0.4% molybdenum, about 5% tungsten, about 5.7% aluminum, about 0.2% titanium, about 8% tantalum, about 6% rhenium, and a balance of nickel.

As used herein, "B93" refers to an alloy including a composition Ni₁₄Cr_{9.5}Co_{4.9}Ti₄W₄Mo₄Al_{4.5}Si_{0.7}B.

As used herein, "D15" refers to an alloy including a composition Ni_{15.3}Cr_{10.3}Co_{3.5}Ta_{3.5}Al_{2.3}B.

Any of the alloy compositions described herein may include incidental impurities.

In some embodiments, a method for treating a component includes the steps of brazing the component with a heterogeneous composition. The heterogeneous composition includes a braze material and a ceramic additive. The braze material and the ceramic additive are intermixed with one another as distinct phases. The heterogeneous composition may have a configuration including, but not limited to, powder, paste, foil, rope, tape, or combinations thereof. Addition of a ceramic additive to the braze material can greatly enhance the oxidization performance and wear resistance at elevated temperatures.

In some embodiments, addition of a ceramic additive to the braze material can greatly enhance the oxidization performance and wear resistance at elevated temperatures between 1800 - 2350 °F.

It was further unexpectedly discovered by the inventors that ceramic fibers and/or powders would be nicely distributed in the heterogeneous composition, acting as a well-defined precipitated phase. The heterogeneous composition shows good flow and wettability on a stainless steel test plate. Furthermore, the heterogeneous composition shows good ability to braze both in horizontal and in vertical orientation. This discovery is significant, because it demonstrates that the heterogeneous composition has a great potential application, for example, for brazing components such as turbine components.

The braze material that may be used in accordance with the various embodiments include, but not be limited to, a braze filler including DF4B, BNi-2, BNi-5, B93, D15, or combinations thereof.

The ceramic additive that may be used in accordance with the various embodiments include, but not be limited to, aluminum oxide, silicon carbide, tungsten carbide, titanium carbide, titanium nitride, titanium carbonitride, or combinations thereof. The silicon carbide may include, but not be limited to, SF-7, SC-9M, or combinations thereof. The silicon carbide may have a configuration selected from the group consisting of fibers, powders, and combinations thereof. Among the silicon carbide, SC-9M silicon carbide is a very high modulus ridged rod nanotube, which is unbreakable at the 10-12 µm. SF-7 is a high-purity, discontinuous silicon carbide fiber. In some embodiments, the silicon carbide may have a configuration including, but not limited to, nanotubes, microtubes, and combinations thereof.

SC-9M is a very high modulus (450GPa) long, rigid rod nanotube which is unbreakable at supplied lengths. SC-9M has a beta (polytype) crystal structure. SC-9M has a diameter of 0.65 µm and a length of 10-12 µm. SC-9M contains 5-30 wt% of free carbon and 35-75 wt% of silica.

SF-7 is high purity, discontinuous silicon carbide fiber. SF-7 has a diamond cubic crystal structure. SF-7 has a mean diameter of 7 µm and a mean length of 65-70 µm. SF-7 has a modulus of 350 GPa. SF-7 contains high purity, β-Silicon Carbide (β-SiC), having 3.04 g/cm³ and 9.5 Mohs.

In accordance with the disclosure, the brazing may be conducted at a temperature between about 1800 and about 2350° F. Thus, in various embodiments, the brazing may be conducted at a temperature from about 1800 and about 2350° F, from about 1850 and about 2300° F, from about 1900 and about 2250° F, from about 1950 and about 2200° F, from about 2000 and about 2150° F, or from about 2050 and about 2100° F, including increments and intervals therein. The brazing may be conducted along with a thermal cycle.

In another embodiment, a heterogeneous composition including a braze material and a ceramic additive is provided. The braze material and the ceramic additive are intermixed with one another as distinct phases.

In another yet embodiment, a heterogeneous composition including a braze material that includes a braze filler; and a silicon carbide has a configuration including fibers, powders, and combinations thereof is provided. The braze filler includes, but not limited to, DF4B, BNi-2, BNi-5, B93, D15, or combinations thereof. The silicon carbide includes, but not limited to, SF-7, SC-9M, or combinations thereof. The braze material and the silicon carbide are intermixed with one another as distinct phases.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method for treating a component comprising the steps of:
brazing the component with a heterogeneous composition, the heterogeneous composition comprising a braze material and a ceramic additive,
wherein the braze material and the ceramic additive are intermixed with one another as distinct phases.

2. The method according to claim 1, wherein the component comprises a superalloy.

3. The method according to claim 2, wherein the superalloy comprises a hard-to-weld (HTW) superalloy material selected from the group consisting of nickel-based superalloy, cobalt-based superalloy, iron-based superalloy, titanium-based superalloy and combinations thereof.

4. The method according to any one of claims 1 to 3, wherein the component is a turbine component selected from the group consisting of at least one of blades, buckets, vanes, nozzles, shrouds, combustor liners, and transition ducts.

5. The method according to any one of claims 1 to 4, wherein the heterogeneous composition has a configuration selected from the group consisting of powder, paste, foil, rope, tape, and combinations thereof.

6. The method according to any one of claims 1 to 5, wherein the braze material includes a braze filler.

7. The method according to claim 6, wherein the braze filler is selected from the group consisting of a) an alloy including a composition, by weight, of about 14% chromium, about 10% cobalt, about 3.5% aluminum, about 2.5% tantalum, about 2.75% boron, about 0.05% yttrium, and a balance of nickel, b) an alloy including a composition, by weight, of about 3% iron, about 3.1 % boron, about 4.5% silicon, about 7% chromium, and a balance of nickel, c) an alloy including a composition, by weight, of about 10% silicon, about 19% chromium, and a balance of nickel, d) B93 (Ni₁₄Cr_{9.5}Co_{4.9}Ti₄W₄Mo₄Al_{4.5}Si_{0.7}B), e) D15 (Ni_{15.3}Cr_{10.3}Co_{3.5}Ti_{3.5}Al_{2.3}B), and combinations thereof.

8. The method according to any one of claims 1 to 7, wherein the ceramic additive is selected from the group consisting of aluminum oxide, silicon carbide, tungsten carbide, titanium carbide, titanium nitride, titanium carbonitride, and combinations thereof.

9. The method according to claim 8, wherein the silicon carbide is selected from the group consisting of SF-7 (high purity, β-Silicon Carbide), SC-9M (5-30 wt% of free carbon and 35-75 wt% of silica), and combinations thereof.

10. The method according to any one of claims 1 to 9, wherein the ceramic additive has a configuration selected from the group consisting of fibers and powders.

11. The method according to any one of claims 1 to 9, wherein the ceramic additive has a configuration selected from the group consisting of nanotubes and microtubes.

12. The method according to any one of claims 1 to 11, wherein the brazing is conducted at a temperature between about 1800 and about 2350° F.

13. A heterogeneous composition comprising:
a braze material and
a ceramic additive,
wherein the braze material and the ceramic additive are intermixed with one another as distinct phases.

14. A heterogeneous composition comprising:
a braze material including a braze filler and
a silicon carbide having a configuration selected from the group consisting of
fibers, powders, and combinations thereof,
wherein the braze filler is selected from the group consisting of a) an alloy including a composition, by weight, of about 14% chromium, about 10% cobalt, about 3.5% aluminum, about 2.5% tantalum, about 2.75% boron, about 0.05% yttrium, and a balance of nickel, b) an alloy including a composition, by weight, of about 3% iron, about 3.1 % boron, about 4.5% silicon, about 7% chromium, and a balance of nickel, c) an alloy including a composition, by weight, of about 10% silicon, about 19% chromium, and a balance of nickel, d) B93 (Ni₁₄Cr_{9.5}Co_{4.9}Ti₄W₄Mo₄Al_{4.5}Si_{0.7}B) e) D15 (Ni_{15.3}Cr_{10.3}Co_{3.5}Ta_{3.5}Al_{2.3}B), and combinations thereof, and wherein the silicon carbide is selected from the group consisting of SF-7 (high purity, β-Silicon Carbide), SC-9M (5-30 wt% of free carbon and 35-75 wt% of silica), and combinations thereof, and wherein the braze material and the silicon carbideare are intermixed with one another as distinct phases.
